# EUROPÄISCHE PATENTSCHRIFT

(11) **EP 1 099 402 B1**
(45) Veröffentlichungstag und Bekanntmachung des Hinweises auf die Patenterteilung: **15.11.2006**
(21) Anmeldenummer: 00710005.0
(22) Anmeldetag: 05.04.2000
(51) Int. Cl.: A47L 13/16, A47L 13/18, A47L 13/19, A47L 13/17

(54) **Reinraumwischtuch sowie Verfahren und Vorrichtung zu seiner Herstellung**
Wiping sheet for clean rooms, method and apparatus for producing the same
Chiffon pour salles blanches, méthode et appareil pour sa fabrication

(30) Priorität: 13.09.1999 DE 19944667; 26.02.2000 DE 10010015; 17.03.2000 EP 00710003
(43) Veröffentlichungstag der Anmeldung: 16.05.2001
(73) Patentinhaber: Labuda, Winfried, 23611 Bad Schwartau (DE); Labuda, Yuko, 23611 Bad Schwartau (DE)
(72) Erfinder: Labuda, Winfried, 23611 Bad Schwartau (DE); Labuda, Yuko, 23611 Bad Schwartau (DE)
(74) Vertreter: Pfenning, Meinig & Partner GbR

(56) Entgegenhaltungen:
- EP-A- 0 638 277
- DE-A- 1 920 788
- DE-C- 19 503 121
- DE-U- 1 909 729
- GB-A- 1 088 991
- GB-A- 1 427 028
- US-A- 3 837 977
- US-A- 4 693 771
- US-A- 4 888 229
- US-A- 5 229 181
- US-A- 5 584 163
- US-A- 5 918 341

## Beschreibung

Die Erfindung betrifft ein Wischtuch für den Einsatz bei den Techniken des reinen Arbeitens sowie ein Verfahren und Vorrichtung zu seiner Herstellung.

In mehreren Industrien werden bei verunreinigungs-gefährdeten Fertigungsprozessen besonders hohe Anforderungen an die Reinheit der Oberflächen im Fertigungs-Umfeld gestellt, wie dies beispielsweise in der Halbleiter-, der pharmazeutischen, der optischen und der Raumfahrt-Industrie der Fall ist. In diesem Zusammenhang hat sich das Reinigen der Oberflächen mit dem Einsatzzweck konstruktiv angepaßten, ultrareinen Wischtüchern als besonders wirksam erwiesen. Geeignete Wischtücher werden z.B. aus textilen oder anderen porösen Flächengebilden hergestellt, deren Beschaffenheit gewährleistet, dass nach der wischenden Reinigungsprozedur der größte Teil der Verunreinigungen, die sich auf den erwähnten Oberflächen befinden, vom Wischtuch aufgenommen sind. Dabei sichern die für die Herstellung der Tücher ausgewählten Ausgangsmaterialien, Fertigungsprozesse und anschließenden Reinigungsverfahren, dass nur geringste Mengen in den Tüchern enthaltener schädlicher Ablagerungen, wie beispielsweise Partikel, Faserfragmente, Ölreste aus der Garnherstellung oder Spuren ionischer Verunreinigungen auf die zu reinigende Oberfläche übertragen werden und dort verbleiben.

Im Hinblick darauf sind insbesondere die Kanten der Wischtücher als kritisch zu bewerten, da die Tücher - in der Regel aus textiler Rollenware - zum Zwecke ihrer Konfektionierung in entsprechend vorgegebene Formatgrößen aufgeteilt werden. An den Tücherkanten entstehen durch einen mechanischen Schneidvorgang lose Fasern, Faserfragmente oder Partikel. Diese würden ohne weitere Bearbeitungsschritte dort lose anhaften, könnten beim Wischvorgang freigesetzt werden und so die Oberflächenreinheit nach dem Wischvorgang beeinträchtigen.

Um dem entgegen zu wirken, ist es aus z.B.
US 4,888,229 Basis des Oberbegriffs des unabhängigen Anspruchs 1 bekannt, einen etwa 5 mm breiten Randbereich solcher Tücher thermisch zu verschmelzen, so dass dort nach diesem Fertigungsschritt kaum noch freie Fasern, Faserfragmente oder Partikel vorhanden sind. Dieser Relativ breite, thermisch verfestigte Rand, welcher sich durch das in der o.a. Patentschrift beschriebene Rand-Verschmelzen ausbildet, wirkt sich wegen seiner Härte und Steifigkeit aber auch nachteilig aus. Es kann durch den harten Rand beim Wischvorgang auf den zu reinigenden Oberflächen zur Ausbildung unerwünschter Riefen kommen und empfindliche Oberflächen können zerstört werden.

Eine andere Art der thermischen Schnittkanten-Verfestigung ermöglicht das Formtrennen mittels Laserstrahl. Dabei bildet sich eine Tuchkante aus miteinander verschmolzenen Filamenten- oder Faserenden der eingesetzten Garne bzw. Fasern. Nachteil dieser Kante ist jedoch ihre relativ geringe mechanische lineare Zugbelastbarkeit. Bei unsachgemäßem oder rauhem Einsatz kann es bei Wischtüchern aus Flächengebilden hoher Dehnbarkeit zu Kantenrissen kommen, wobei dann eine Partikelfreisetzung aus dem Kantenbereich nicht ausgeschlossen werden kann.

Wischtücher, die bei den Techniken des reinen Arbeitens zur Anwendung kommen, haben normalerweise eine quadratische bzw. rechteckige Form und ungefaltet eine Kantenlänge von ca. 230 mm. Da sich aber bei jedem Wischvorgang ein Reinigungseffekt nur in solchen Flächenbereichen eines Wischtuchs erzielen lässt, bei denen ein bestimmter Anpressdruck zwischen Tuch und zu reinigender Oberfläche besteht, wird bei der Arbeit mit einem herkömmlichen Wischtuch nur ein sehr geringer Teil der Wischtuchfläche effektiv genutzt. Das hat folgenden Grund:

Ein herkömmliches, z.B. zweifach gefaltetes Reinraum-Wischtuch der gängigen Abmessungen 11,5 x 11,5 cm (nach Faltung) muss normalerweise bei seinem Einsatz im Randbereich zwischen Daumen und Zeigefinger festgehalten werden, damit es über die zu reinigende Oberfläche hinweg bewegt werden kann. Dadurch ist es physiologisch unvermeidbar, den Daumen beim Wischvorgang anzuheben. Dies wiederum führt zu einem gleichzeitigen Heben der Handfläche und somit zu einer erheblichen Reduzierung der effektiven Wischfläche des Tuches. Diese ist nun auf die vier Fingerkuppen und einen Teil der Mittelfingerglieder beschränkt.

Nachteil dieser physiologischen Gegebenheit für den Wischvorgang ist es, dass es beim Beseitigen zäher Verunreinigungen (Farben, Lacke) oder Verkrustungen (getrocknete Säurespritzer, Salze) besonders beim Einsatz ohne Lösungsmittel die Reibung zwischen Tuch und Oberfläche die Haltekraft zwischen Daumen und Zeigefinger übersteigt. So kommt es beim Wischen über die Verunreinigungen zum Verschieben der Lagen untereinander.

Aus DE 730 258, DE 298 11 160 U1, DE 19 20 788 U, EP 0 638 277 A1 sind Fausthandschuhe für Reinigungszwecke bekannt. Diese sind jedoch für die Aufgaben der Präzisionsreinigung ungeeignet. Sie haben außerdem vergleichsweise zum erfindungsgemäßen Wischtuch viele Nachteile:
Geringe Fingerfühligkeit, höherer Materialeinsatz, längere An- und Ausziehzeiten, Notwendigkeit der Bereitstellung mehrerer Größen, größere potentielle Verunreiniger-Flächen, nur einseitige Benutzbarkeit wegen der einseitigen Daumenposition.

Aus US 5,918,341 ist ein gefaltetes Gebilde zur Reinigung bekannt, das durch nähen zusammengehalten ist.

In US 5,584,163 ist ein Applikator für Behandlungsmittel bekannt, bei dem unterschiedliche flächige Materialien gefaltet und verschweißt sind.

Reinraumtücher, bei denen am Rand zwei übereinander liegende Lagen miteinander verschweißt sind, sind in US 5,229,181 beschrieben.

Die US 4,693,771 betrifft eine Ultraschall-Schweiß- und Schneideinrichtung.

Es ist Aufgabe der Erfindung, Wischtücher dahingehend zu verbessern, dass bei gleichermaßen geringem Transfer von Verunreinigungen aus dem Wischtuch auf die zu reinigende Oberfläche hin, sowohl dessen Reinigungseffizienz als auch dessen Handhabung verbessert und gleichzeitig die Gefahr von Oberflächenschäden durch den Wischvorgang verringert wird.

Erfindungsgemäß wird diese im Rahmen der Merkmale des Anspruchs 1, für ein Herstellungsverfahren gemäß Anspruch 18 und für eine Vorrichtung zur Herstellung gemäß Anspruch 29 gelöst. Vorteilhafte Ausgestaltungen und Weiterbildungen der Erfindung ergeben sich aus den in den untergeordneten Ansprüchen genannten Merkmalen.

Für die erfindungsgemäßen Wischtücher können vorzugsweise elastische Gebilde, wie z.B. Gewirke, Gestrikke, polymere Netzgebilde, polymerer Schaumstoff oder Gewebe, Vlies, Flock, Stitchbond-Gebilde oder flächige Kombinationen dieser Gebilde verarbeitet werden, die zumindest thermisch verformbare Materialien, wie z.B. Polymerfasern oder -garne enthalten, wobei es sich auch um reine Polymergebilde handeln kann. Besonders vorteilhaft im Sinne einer hohen Reinigungs-Effizienz werden diese Wischtücher auch aus Mikrofasern oder -garnen hergestellt.

Vorteilhaft ist es, zumindest die an beiden Seiten aussenliegenden Lagen aus unterschiedlichen Materialien auszubilden, welche beispielsweise ein unterschiedliches Adsorptionsvermögen aufweisen.

Für eine Vor- und eine Feinreinigung können auch die beiden Seiten aus jeweils feinerem und gröberen Gestrick, Gewirk, Gewebe, Flock, Stitchbond-Gebilde, einem polymeren Netzgebilde oder einem polymeren Schaumstoff-Zuschnitt oder schmirgelfähigem Flächengebilde in Kombination mit einem der o.a. Materialien gebildet sein.

Die Herstellung der erfindungsgemäßen Wischtücher kann aber auch automatisch erfolgen.

Manuelle Tücherfertigung kleiner Serien:

Das für die Herstellung der erfindungsgemäßen Wischtücher verwendete Ausgangsgebilde hat vor der manuellen Herstellung normalerweise eine quadratische oder rechteckige Form.

Ausgehend von einem solchen einlagigen, textilen Gebilde wird dieses erfindungsgemäß einmal oder mehrmals gefaltet. Es ist bei den Techniken des reinen Arbeitens ohnehin die geübte Praxis, Wischtücher vor ihrem Einsatz mehrfach zu falten, so dass dieser Arbeitsgang durch die Erfindung zeitsparend vorweggenommen ist. Im beispielsweise zweifach gefalteten Zustand zeigt das Wischtuch an zwei Stellen je vier offenliegende, lineare, also insgesamt acht offenliegende und zwei durch Faltung gebildete Kanten. Durch formtrennendes Verschweißen mittels Ultraschall oder den Einsatz temperierter Stanzwerkzeuge entsteht erfindungsgemäß anstelle der acht offenliegenden eine einzige rechteckige oder bogenförmige oder beliebig anders geformte Schweißkante, welche eine vergleichsweise zu US 4,888,229 sehr geringe Dicke und Breite hat und außerdem in der Profilsicht des Wischtuchs mittig angeordnet ist, so dass sie beim Wischvorgang nicht mit der Oberfläche in Berührung kommt. Für das trennende Verschweißen kann beispielsweise eine Ultraschall-Presse eingesetzt werden. Durch die Form der eingesetzten Sonotrode-Schneidmesser-Kombination wird die Form der Schweißkante und somit die letztendliche Gestalt des Wischtuchs bestimmt. Dabei kann das Verschweißen allein durch thermische Verformung des verwendeten Materials erreicht werden, ohne dass es zu wesentlichen Änderungen der Materialeigenschaften kommt. Alternativ kann für das trennende Verschweißen jedoch auch ein elektrisch beheiztes Profilmesser dienen, welches in eine geeignete Presse eingebaut ist.

Zur Herstellung eines kantenfreien Wischtuchs können die innenliegenden Seiten des erfindungsgemäßen Wischtuchs nach außen gewendet werden, so dass auch die lagenverbindende Schweißkante inwendig angeordnet ist und eine Verunreinigung der zu reinigenden Oberfläche durch Partikel aus dem Kantenbereich oder eine Verletzung derselben durch Riefenbildung verhindert wird.

Das erfindungsgemäße Wischtuch kann im Rahmen seiner Formgebung die gesamte Hand oder die Vorderhand bis etwa hinter den Mittelhandknochen umschließen. So muss es beim Wischen nicht mit dem Daumen festgehalten werden, die Hebung der gesamten Handfläche findet nicht zwingend statt und es wird eine erheblich größere effektive Wischfläche als bei Daumen-Zeigefinger-gehaltenen Wischtüchern nutzbar. Dadurch ergibt sich eine mögliche Verringerung der Reinigungszeit. Beim Entfernen von zähen Verunreinigungen oder beim Reinigen rauher Oberflächen könnte es jedoch auch bei dem erfindungsgemäßen Wischtuch zu seitlichen Verschiebungen kommen, wenn das Tuch die Hand nicht sehr stramm umschließt. Mit einem Fixiersteg oder Trennschlitz, der sich im Bereich einer der Finger-Zwischenräume befindet und parallel zu den durch die Eingriffsöffnung eingeführten Fingern ausgerichtet ist, kann ein verschiebungsfreier Sitz des Wischtuchs beim Wischvorgang auch auf rauhen oder leicht klebrigen Oberflächen gesichert werden.

Da so die Form und Größe des Wischtuchs, der aktiv nutztbaren Fläche entspricht, wird das Verunreinigungspotential drucklos mitgeführter Wischtuch-Flächen-Anteile, wie es bei quadratischen Wischtüchern vorhanden ist, erheblich verringert.

Die erfindungsgemäßen Wischtücher können aber auch so ausgebildet sein, dass zwischen deren Lagen ein Material eingefügt ist, welches das Wischtuch-Volumen, dessen Elastizität zur Oberflächen-Anpassung und/oder dessen Saugfähigkeit erhöht. Hierfür kann beispielsweise ein Vlies, ein Superabsorbent oder ein retikulierter Schaumstoff als elastisches und saugfähiges Material vor dem herstellungsgemäßen Faltvorgang auf das vorbereitete Gewirke oder Gewebe aufgelegt werden. Gegebenenfalls kann das Material zumindest teilweise mit den Wischtuchlagen flächig verbunden und die Wischtücher dann durch Falten, Trennen und Verschmelzen, wie bereits beschrieben, gefertigt werden. Dabei kann es ausreichen, dass die Verbindung allein durch die Verschmelzung der Lagen im entsprechenden Randbereich gesichert ist.

Zusätzlich, aber auch anstelle des volumenvergrößernden, elastischen oder saugfähigen Materials kann vor dem Faltvorgang auch über eine Flächenhälfte eine flüssigkeitsdichte Folie gelegt und befestigt werden. Eine solche Folie wirkt sich insbesondere bei der Arbeit mit Reinigungsmitteln, die in Verbindung mit dem erfindungsgemäßen Wischtüchern eingesetzt werden, vorteilhaft aus, wenn zwischen den gefalteten Lagen ein offener Eingriff freigehalten worden ist, in den beispielsweise die Finger eingeführt werden können, so dass ein unmittelbarer Kontakt der Haut mit dem flüssigen Reinigungsmittel verhindert wird.

Die erfindungsgemäßen Wischtücher können allein, aber auch mit dem bereits erwähnten saugfähigen Material mit einem geeigneten Reinigungsmittel getränkt eingesetzt werden. In diesem Fall ist es besonders günstig, solche Wischtücher vor dem Gebrauch zu verpacken. Dabei können sie einzeln oder in vorgegebenen Losgrößen in für das verwendete Reinigungsmittel resistenten und dichten Verpackungsmaterialien, wie z.B. Folienbeutel eingeschlossen sein, wobei unter Resistenz insbesondere die chemische Löslbarkeit bzw. die Vermeidung von chemischen Reaktionen gemeint ist.

Hierfür können geeignete Kunststoff- oder Metallfolien oder metallbeschichtete Kunststofffolien, die entsprechend an ihren Rändern verschweißt sind, Einsatz finden.

Die mit Reinigungsmittel getränkten Wischtücher können aber auch in gestapelter Form in stabile Behältnisse, z.B. mit hermetischem Deckelverschluss eingeschlossen werden, um beispielsweise ein Verdunsten des Reinigungsmittels aus dem Wischtuch zu verzögern.

Erfindungsgemäße Wischtücher können allein durch Spreizen der Finger sicher auf dem vorderen Teil der Hand gehalten werden, wodurch gleichzeitig eine optimale effektive Reinigungsfläche gegeben ist. Dabei braucht das Wischtuch nicht, wie z.B. bei einem Reinigungs-Handschuh, zeitaufwendig über die ganze Hand einschließlich des Daumens über- bzw. abgestreift zu werden. Der Halt und die Handhabbarkeit kann mit Hilfe eines Fixiersteges oder Trennschlitzes weiter verbessert werden.

Eine im Vergleich mit einem Reinigungs-Handschuh reduzierte Größe des Wischtuchs ermöglicht und vereinfacht den fertigungstechnischen Einsatz von formtrennenden Ultraschall-Schweißverfahren als Basis eines vollautomatischen Fertigungsverfahrens.

Das erfindungsgemäße Wischtuch weist keine scharfen und spröden Kanten auf und ist daher in hohem Maße oberflächenschonend für die Reinigung kritischer Oberflächen einsetzbar.

Erfindungsgemäße Wischtücher lassen sich, anders als ein Reinigungs-Handschuh, beidseitig einsetzen und nach Wenden der Innenflächen nach außen, kann sogar eine vierseitige Nutzung erfolgen.

Nachfolgend soll die Erfindung anhand von Beispielen näher beschrieben werden.

Dabei zeigen:
- Figur 1: in drei Schritten die Herstellung eines Beispiels eines erfindungsgemäßen Wischtuchs;
- Figur 2: ein Beispiel eines erfindungsgemäßen Wischtuchs mit einem bogenförmigen, verschweißten Randbereich;
- Figur 3: einen Teilschnitt eines erfindungsgemäßen Wischtuchs mit einem zusätzlichen Material;
- Figur 4: einen Teilschnitt eines weiteren Beispiels eines erfindungsgemäßen Wischtuchs mit einer Auskleidung aus einem flüssigkeitsundurchlässigen, flächigen Material;
- Figur 5: ein von einer Rolle abziehbares, vierfach gefaltetes Gebilde, aus dem Wischtücher durch trennendes Schweißen erhalten werden;
- Figur 6: eine schematische Darstellung eines Wischtuches mit einem Trennschlitz und
- Figur 7: eine Vorrichtung zur Herstellung von Wischtüchern aus einem vorgefalteten von einer Rolle abziehbaren Gebilde.

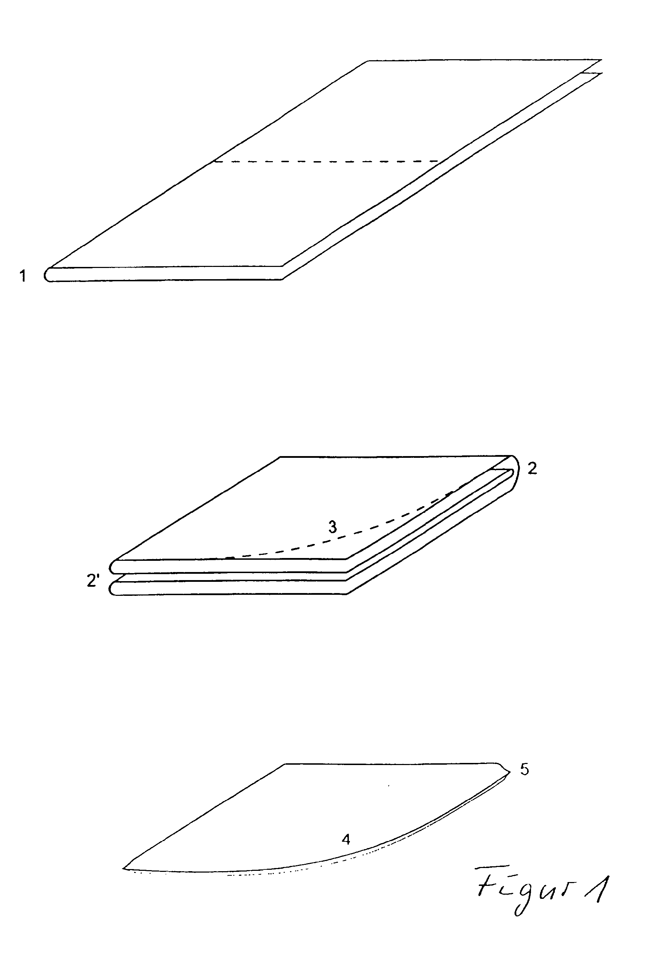

In Figur 1 ist, von oben nach unten gesehen, in drei Schritten eine Möglichkeit zur Herstellung eines erfindungsgemäßen Wischtuchs dargestellt. Dabei wird aus einem hier quadratischen Ausgangsgebilde, bestehend aus einem im einleitenden Teil der Beschreibung genannten Material, ein doppellagiges Gebilde mit einer Faltung 1 hergestellt. Wie in der mittleren Darstellung angedeutet, wird dieses doppellagige Gebilde um die in der oberen Darstellung gestrichelt eingezeichnete Linie nochmals gefaltet, so dass in einer Vorstufe ein vierlagiges Gebilde mit durch die Faltung 2 und 2' erhaltenen Rändern vorliegt.

Dabei können in nicht dargestellter Form die ungefalteten Randbereiche miteinander verschweißt werden, so dass ein, in diesem Fall quadratisch ausgebildetes Wischtuch erhalten werden kann.

Günstiger ist es jedoch, wie mit der gestrichelten Linie 3 angedeutet, zumindest einen Teil des Randes bogenförmig auszubilden, wobei dies in einem Verfahrensschritt mit dem Verschmelzen des ungefalteten Randbereiches erfolgen kann, so dass ein bogenförmiger Rand 4 erhalten werden kann. Der bogenförmige Rand 4 kann die Form eines Teilkreises aufweisen, bei dem alle Lagen mit einer Schweißnaht verbunden sind.

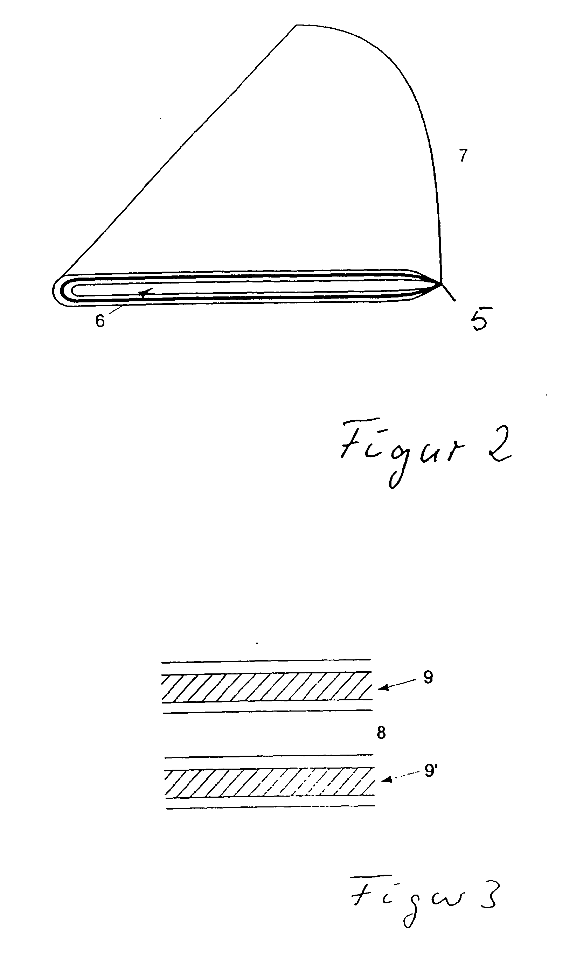

Bei dem in Figur 2 gezeigten Beispiel wird zu dessen Herstellung genauso verfahren, wie beim Beispiel nach Figur 1, wobei jedoch lediglich der Rand 7 zwar bogenförmig, aber abweichend von der Teilkreisform ausgeführt ist, so dass ergonomisch günstigere, die Handform berücksichtigende Verhältnisse erreicht werden.

Die Ränder 4 und 7, aber auch die Ecken 5 bieten sich vorteilhaft für die Reinigung von Ecken- und Kantenbereichen an gewinkelten Oberflächen an, so dass sie gegenüber herkömmlichen Wischtüchern bessere Reinigungsergebnisse liefern können.

In Figur 2 ist außerdem ein Eingriff 6 erkennbar, der zwischen den gefalteten Lagen ausgebildet ist, und in den zumindest die Finger einer Hand eingeführt werden können.

Sowohl das Beispiel nach Figur 1, wie auch das Beispiel nach Figur 2 können nach dem ersten Gebrauch gewendet werden, so dass auch die vorher innenliegenden Flächen genutzt werden können.

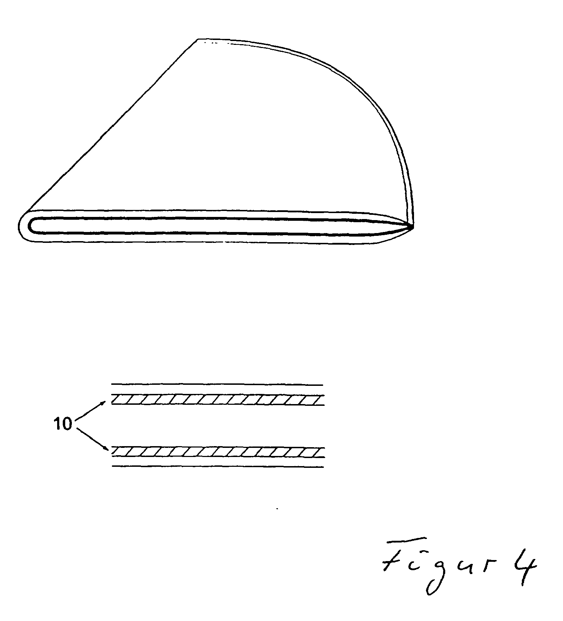

In der Figur 3 ist ein Beispiel eines erfindungsgemäß modifizierten Wischtuchs im Teilschnitt dargestellt, wobei zwischen gefalteten Lagen des Ausgangsgebildes ein Material 9 bzw. 9' angeordnet ist, das beispielsweise eine Volumenerhöhung, eine höhere Elastizität für die Anpassung an die zu reinigende Oberfläche und/oder als Flüssigkeitsspeicher dient. Ein Beispiel für ein solches flüssigkeitsspeicherndes Material sind Superabsorbentien, die die Eigenschaft aufweisen, dass bei Ausüben eines Druckes gespeicherte Flüssigkeit freigesetzt wird.

Weiter ist eine offenliegende Falte 8 zwischen den außenliegenden Lagen, die wiederum die Materialien 9 und 9' einschließen können, dargestellt, die durch den Eingriff 6 für eine Hand oder die Finger einer Hand zugänglich ist.

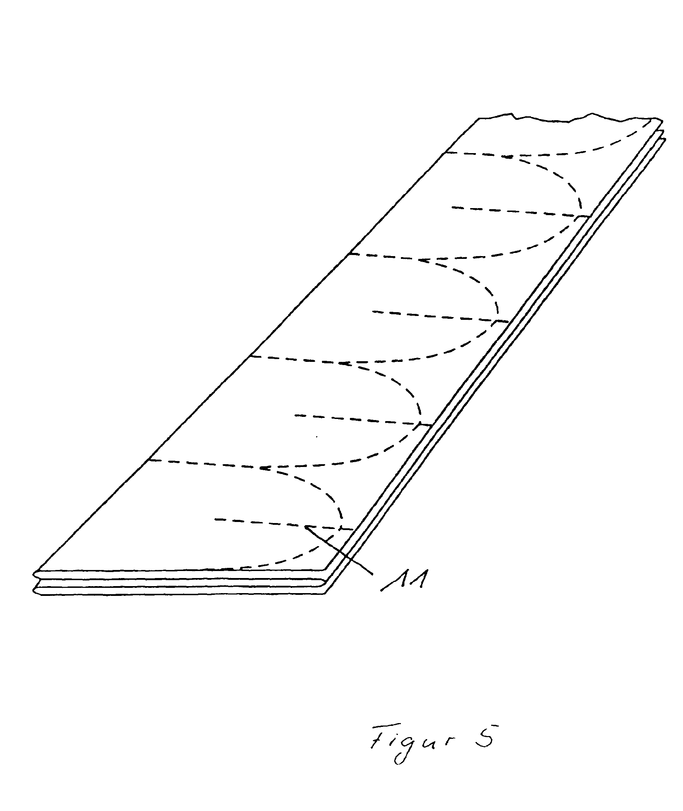

In Figur 4 ist eine weitere Möglichkeit für die Weiterbildung eines erfindungsgemäßen Wischtuchs dargestellt, die allein, aber auch in Kombination mit dem Beispiel nach Figur 3 angewendet werden kann. Hierbei ist zwischen den einzelnen Lagen eines erfindungsgemäßen Wischtuchs ein flüssigkeitsundurchlässiges Material 10 angeordnet. Dies kann beispielsweise eine Folie, aus Metall, Kunststoff oder eine metallbeschichtete Kunststofffolie sein, die einen Hautkontakt mit der in die offenliegende Falte 8 eingeführten Hand bzw. deren Finger verhindert.

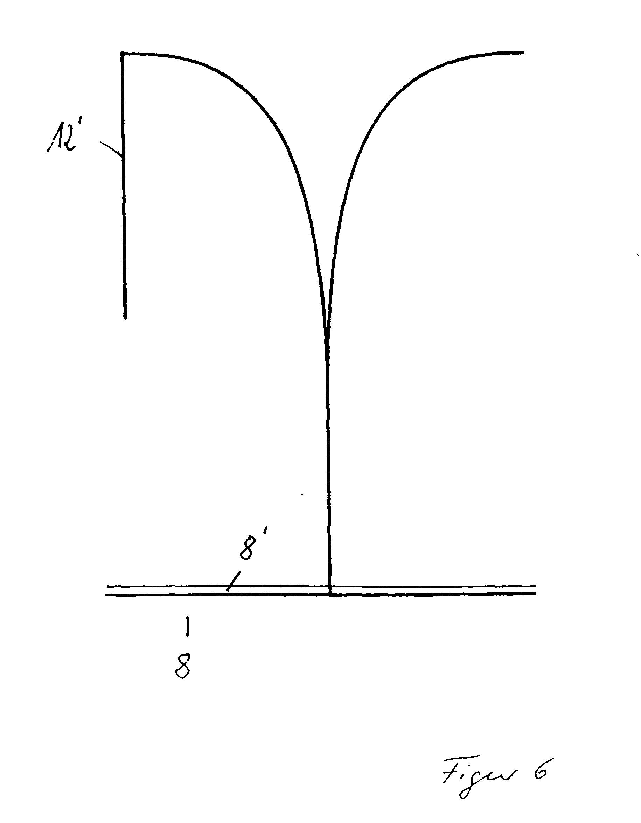

In der Figur 5 ist ein hier vierlagig gefaltetes Gebilde als Vorprodukt dargestellt. Dieses Vorprodukt kann für eine automatisierte Fertigung beispielsweise auf einer Rolle aufgewickelt und von dort abgezogen und über eine ebene Arbeitsfläche geführt werden.

Dabei können einzelne Wischtücher, die mit gestrichelten Linien in ihrer äußeren Kontur angedeutet sind, durch trennendes Schweißen in ihrer Form und Größe erhalten und gleichzeitig vereinzelt werden.

Bei dem hier gezeigten Beispiel eines vierlagig gefalteten Gebildes liegen die Eingriffsöffnungen 6 in Bereichen, in denen die Ränder durch Faltungen gebildet sind, so dass eine die Freisetzung von Fasern und Partikeln verhindernde Randverfestigung nicht zwingend erforderlich ist.

Außerdem ist in dieser Darstellung die Anordnung ausgebildeter Fixierstege 11 an einem solchen Wischtuch ebenfalls mit einer geraden gestrichelten Linie angedeutet. Dabei kann ein solcher Fixiersteg 11 an einem Wischtuch zumindest durch Verschweißen der innenliegenden Lagen des gefalteten Gebildes erhalten werden.

Bei der Benutzung eines solchen Wischtuchs befindet sich der Fixiersteg 11 zwischen benachbarten Fingern einer in das Wischtuch durch die Eingriffsöffnung 6 eingeführten Hand und bietet einen zusätzlichen Halt, so dass die Handhabbarkeit deutlich verbessert ist.

Durch die konkave Kontur des vorderen Teiles, der in Figur 5 gezeigten Wischtücher, ist eine Anpassung an die Handkontur gegeben.

Es besteht aber auch die Möglichkeit, Wischtücher in nicht dargestellter Form quadratisch oder rechteckig auszubilden, indem die einzelnen Wischtücher vor dem vorgefalteten Gebilde mit einer geraden Schweißnaht durch trennendes Schweißen, bei dem alle übereinander liegenden Lagen des Gebildes mit einer Schweißnaht verbunden werden, erhalten werden können.

Anstelle des Fixiersteges 11 kann aber auch ein entsprechend ausgerichteter Trennschlitz 12 ausgebildet werden, wobei es günstig ist, dessen Ränder 12' wiederum so herzustellen, dass eine alle Lagen miteinander verbindende Schweißnaht vorhanden ist.

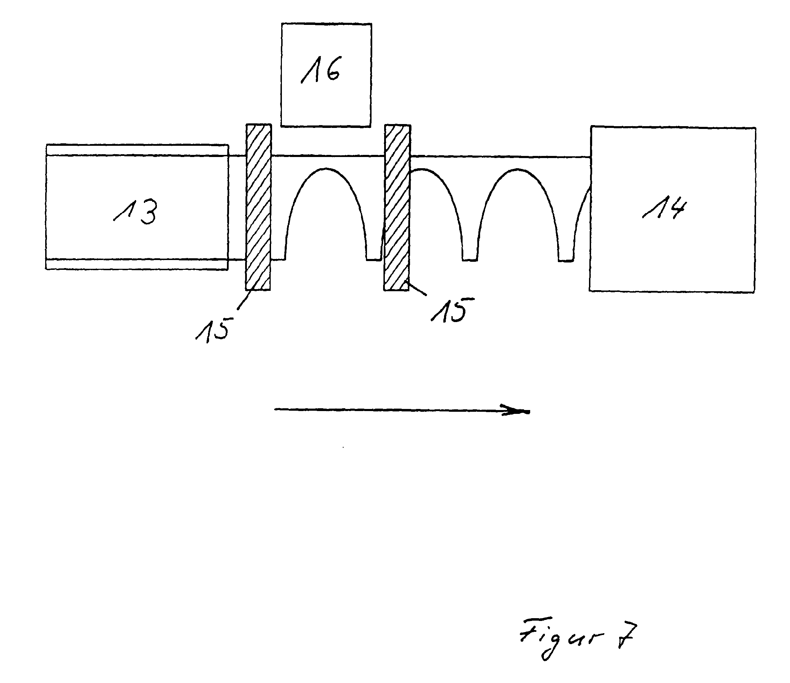

Eine solche Ausbildung ist bei dem Beispiel gemäß Figur 6 angedeutet.

Das Einbringen eines Trennschlitzes 12, anstelle der Fixierstege 11, hat den Vorteil, dass ein mit Trennschlitz 12 versehenes Wischtuch auch gewendet werden kann, so dass die vorab innenliegenden Lagen auch für die Reinigung genutzt werden können. Außerdem ist es für die Reinigung besonders empfindlicher Oberflächen günstig, das Wischtuch im gewendeten Zustand zu benutzen, da die Gefahr von scharfkantigen Rändern der Schweißnaht dadurch völlig ausgeschlossen werden kann.

Die Länge der Fixierstege 11 bzw. Trennschlitze 12 sollte mindestens 20 mm betragen.

In der Figur 6 ist außerdem dargestellt, dass der Rand 8' an der Eingriffsöffnung 6 eines Wischtuchs verfestigt werden kann, um die Freisetzung von Fasern und Partikeln zu verhindern, was besonders dann durchgeführt werden sollte, wenn dieser Rand 8', der an der Eingriffsöffnung 6 gebildet ist, nicht eine Faltkante von gefalteten Lagen des verwendeten Gebildes ist.

Die Verfestigung des Randes 8' kann durch einen Energieeintrag, z.B. durch eine Erwärmung, die mit einer Heizleiste bzw. einem Laser erreicht werden kann, erfolgen. Die Verfestigung kann aber auch mittels rollierender Ultraschallmesser erreicht werden.

Zur Herstellung von Wischtüchern mit einer Kontur, wie sie in Figur 5 gezeigt sind, kann ein Messerteil einer Sonotrodenmesserkombination verwendet werden, welches eine Kontur aufweist, die den Linien 17, 17' und 12', wie in Figur 6 gezeigt folgt. Dadurch können einzelne Wischtücher mit geringem Abfall durch trennendes Schweißen aus einem Materialband hergestellt und vereinzelt werden. Mit der gestrichelt gezeichneten Kante 17' eines solchen Messerteiles wird auch der Abfallanteil zwischen nachfolgend hergestellten Wischtüchern jeweils abgetrennt und die einzelnen Abfallstücke können, im Gegensatz zum in Figur 7 gezeigten Beispiel, unmittelbar in einen unterhalb der Ultraschallstanze 16 angeordneten Abfallsammelbehälter fallen.

Der Messerteil, der der Linie 12' folgt, kann einen Fixiersteg 11 bzw. einen Trennschlitz 12 ausbilden bzw. einbringen.

In der Figur 7 ist ein Beispiel einer Vorrichtung, wie sie für eine automatisierte Herstellung von erfindungsgemäßen Wischtüchern verwendet werden kann, gezeigt.

Dabei wird aus einem Vorratsbehälter 13 ein vorgefaltetes Gebilde, wie es beispielsweise in Figur 5 gezeigt ist, von einer Rolle abgezogen und mittels mindestens einer Rolle 15 über eine ebene Arbeitsfläche in Richtung des Pfeiles in getakteter Form transportiert.

Bei jedem dieser Transporttakte wird mit Hilfe einer Sonotrode einer Ultraschallstanze 16 ein Wischtuch durch trennendes Schweißen hergestellt. Dabei ist es günstig, für den getakteten Transport, wie bei dem in Figur 7 gezeigten Beispiel, zwei orthogonal zur Transportrichtung ausgerichtete Rollen 15, die beidseitig an der Ultraschallstanze 16 angeordnet sind, zu verwenden, um einen geradlinigen Transport und eine Spannung am gefalteten Gebilde während des trennenden Schweißens aufrecht zu sichern. Die Form der Sonotrode entspricht dabei der Kontur von Randbereichen des fertigen Wischtuchs, die miteinander verschweißt sind.

Es kann aber auch ein nichtgefaltetes Gebilde mit einer nicht dargestellten Einrichtung mindestens einmal gefaltet und dann der Ultraschallstanze 16 zugeführt werden.

Bei der hier dargestellten Wischtuchform wird das verwendete Ausgangsmaterial für die Herstellung der Wischtücher nicht vollständig ausgenutzt und der verbliebene Teil wird im Anschluß in einen Abfallsammelbehälter 14 geführt und kann in gesammelter Form einer anderen nützlichen Verwendung bzw. dem Recycling zugänglich gemacht werden.

Der nicht nutzbare Teil des Ausgangsmaterials kann reduziert werden, wenn die Form und Größe der Wischtücher entsprechend optimiert wird, wie dies z.B. bei dem in den Figuren 5 und 6 gezeigten Beispielen von Wischtüchern der Fall ist. Der Anfall von Abfall kann vollständig vermieden werden, wenn quadratische bzw. rechteckige Wischtücher mit außenseitigen, geradlinigen Schweißnähten hergestellt werden.

Vorteilhaft ist die Arbeitsfläche einer Vorrichtung zur Herstellung von Wischtüchern in einem Winkel gegenüber der Horizontalen nach unten geneigt. Dabei kann der Neigungswinkel maximal 90° betragen.

Die Ultraschallstanze 16 mit Sonotrode sind dann entsprechend geneigt zur Arbeitsfläche ausgerichtet.

Die durch trennendes Schweißen erhaltenen und vereinzelten Wischtücher fallen bzw. gleiten entlang der durch ein Teil der Arbeitsfläche gebildeten geneigten Ebene in einen nicht dargestellten Sammelbehälter oder gelangen zu einer Konfektioniereinrichtung.

## Patentansprüche

1. Wischtuch für den Einsatz bei den Techniken des reinen Arbeitens, welches aus einem zumindest thermisch verformbare Materialien enthaltendem Flächengebilde besteht, **dadurch gekennzeichnet, dass** durch mindestens eine Faltung des Gebildes doppel- oder mehrlagig und an einer offen liegenden Falte eine Eingriffsöffnung ausgebildet ist,
wobei mindestens ein Randbereich, welcher nicht durch Faltkanten (2, 2') begrenzt ist, durch eine alle Lagen verbindende Schweißkante (4) zusammengefügt ist.

2. Wischtuch nach Anspruch 1,
**dadurch gekennzeichnet, dass** mindestens vier Lagen mit einer die Lagen verbindenden Schweißkante zusammengefügt sind.

3. Wischtuch nach Anspruch 1 oder 2, **dadurch gekennzeichnet, dass** das Gebilde ein Gewebe,
Gestrick, Vlies, Flock, Gewirk ist oder aus einem polymeren Netzgebilde, Stitchbond-Gebilde oder einem polymeren Schaumstoff-Zuschnitt oder einer flächigen Kombination solcher Gebilde besteht.

4. Wischtuch nach einem der Ansprüche 1 bis 3, **dadurch gekennzeichnet, dass** zumindest die an beiden Seiten aussenliegenden Lagen aus unterschiedlichen Materialien und/oder aus einem feineren und einem gröberen Gestrick, Gewirk, Gewebe, Flock, Stitchbond-Gebilde, einem polymeren Netzgebilde oder einem polymeren Schaumstoff-Zuschnitt oder einem dieser Materialien als einer der äußeren und/oder inneren Lagen und einem schmirgelfähigen Flächengebilde als weitere Lage/Lagen gebildet sind.

5. Wischtuch nach einem der Ansprüche 1 bis 5, **dadurch gekennzeichnet, dass** die durch das Verschweißen der Lagen entstehende Schweißkante 84) eine Bogenform oder eine Winkelform hat.

6. Wischtuch nach einem der Ansprüche 1 bis 5, **dadurch gekennzeichnet, dass** die zur Reinigung nutzbare Fläche des Wischtuchs in etwa der Größe einer menschlichen Hand oder zumindest der Größe der von der Vorderhandkontur eingenommenen Fläche entspricht.

7. Wischtuch nach einem der Ansprüche 1 bis 6, **dadurch gekennzeichnet, dass** sich zwischen den Lagen des gefalteten Wischtuchs ein Material (9, 9') befindet, welches der Volumenerhöhung, der Erhöhung der Elastizität, der Oberflächen-Anpassung und/oder als Flüssigkeitsspeicher dient.

8. Wischtuch nach Anspruch 7, **dadurch gekennzeichnet, dass** das Material des Wischtuchs mit dem Material (9, 9'), welches der Volumenerhöhung, der Erhöhung der Elastizität der Oberflächen-Anpassung oder als Flüssigkeitsspeicher dient, zumindest teilweise im Randbereich und/oder flächig verbunden ist.

9. Wichtuch nach Anspruch 7 oder 8, **dadurch gekennzeichnet, dass** das Material (9, 9'), welches als Flüssigkeitsspeicher dient, ein Superabsorbent ist.

10. Wischtuch nach einem der Ansprüche 1 bis 9, **dadurch gekennzeichnet, dass** das Wischtuch mit einem Reinigungsmittel oder einem Auftragsmittel getränkt ist.

11. Wischtuch nach einem der Ansprüche 1 bis 10, **dadurch gekennzeichnet, dass** es vor Gebrauch in einer für das Reinigungs- oder Auftragsmittel resistenten und undurchlässigen Verpackung oder Behältnis eingeschlossen ist.

12. Wischtuch nach einem der Ansprüche 1 bis 11, **dadurch gekennzeichnet, dass** es im Inneren mit einem flüssigkeitsundurchlässigen flächigen Material (10) ausgekleidet ist.

13. Wischtuch nach einem der Ansprüche 1 bis 12, **dadurch gekennzeichnet, dass** die innenliegenden Teile nach außen gewendet sind.

14. Wischtuch nach einem der Ansprüche 1 bis 13, **dadurch gekennzeichnet, dass** zumindest die innenliegenden Lagen, zur Ausbildung eines parallel zur Eingriffsöffnung (8) eingeführten Fingern einer Hand ausgerichteten Fixiersteges (11), miteinander verbunden sind.

15. Wischtuch nach einem der Ansprüche 1 bis 13, **dadurch gekennzeichnet, dass**, ausgehend vom verschweißten Randbereich, ein parallel zu durch die Eingriffsöffnung (6) eingeführten Fingern einer Hand ausgerichteter Trennschlitz (12) ausgebildet ist, dessen Ränder (12') durch eine alle Lagen verbindende Schweißnaht gebildet sind.

16. Wischtuch nach Anspruch 14 oder 15, **dadurch gekennzeichnet, dass** der Fixiersteg (11) oder der Trennschlitz (12) eine Länge von mindestens 20 mm aufweist.

17. Wischtuch nach einem der Ansprüche 1 bis 16, **dadurch gekennzeichnet, dass** das Material des Gebildes am Rand (8') der Eingriffsöffnung (6) verfestigt ist.

18. Verfahren zur Herstellung eines Wischtuchs nach einem der Ansprüche 1 bis 17, **dadurch gekennzeichnet, dass** ein zumindest thermisch verformbare Materialien enthaltendes Gebilde doppel- oder mehrlagig gefaltet und Randbereiche, welche nicht durch die infolge der Faltung entstehenden gerundeten Kanten (2, 2') begrenzt sind, zu einer alle Lagen miteinander verbindenden Schweißkante (4), durch trennendes Schweißen zusammengefügt und vereinzelt werden.

19. Verfahren nach Anspruch 18, **dadurch gekennzeichnet, dass** die durch Zusammenfügen erhaltene Schweißkante (4) beim trennenden Schweißen in einer Bogen- oder Winkelform ausgebildet wird.

20. Verfahren nach Anspruch 18 oder 19, **dadurch gekennzeichnet, dass** zum Trennen und Schweißen Ultraschall eingesetzt wird.

21. Verfahren nach Anspruch 20, **dadurch gekennzeichnet, dass** eine geformte Sonotrode-Schneidkombination eingesetzt wird.

22. Verfahren nach einem der Ansprüche 18 bis 21, **dadurch gekennzeichnet, dass** das Wischtuch mit seinen innenliegenden Teilen nach außen gewendet wird.

23. Verfahren nach einem der Ansprüche 18 bis 22, **dadurch gekennzeichnet, dass** ein mindestens einmal gefaltetes Gebilde von einer Rolle abgezogen und mittels einer Sonotrode-Schneidkombination äußere Randbereiche, bis auf eine Eingriffsöffnung (6) zu einer durchgehenden oder zwei parallel zueinander ausgerichteten Kante(n), an der/den alle Lagen miteinander verschweißt sind, zusammengefügt werden.

24. Verfahren nach Anspruch 23, **dadurch gekennzeichnet, dass** zur Ausbildung eines Fixiersteges (11) mindestens die innenliegenden Lagen des gefalteten Gebildes miteinander verbunden werden.

25. Verfahren nach Anspruch 24, **dadurch gekennzeichnet, dass** die Lagen miteinander verschweißt werden.

26. Verfahren nach Anspruch 23, **dadurch gekennzeichnet, dass** ein Trennschlitz (12) ausgebildet wird, dessen Ränder (12') mit einer alle Lagen miteinander verbindenden Schweißnaht miteinander verbunden sind.

27. Verfahren nach einem der Ansprüche 18 bis 26 **dadurch gekennzeichnet, dass** das Gebilde am Rand (8') der Eingriffsöffnung (6) verfestigt wird.

28. Verfahren nach Anspruch 27, **dadurch gekennzeichnet, dass** das Gebilde am Rand (8') der Eingriffsöffnung (6) durch einen Energieeintrag verfestigt wird.

29. Vorrichtung zur Herstellung von Wischtüchern nach einem der Ansprüche 1 bis 17, **dadurch gekennzeichnet, dass** ein gefaltetes Gebilde über eine ebene, zur Horizontalen in einem Winkel geneigten Arbeitsfläche, in getakteter Form geführt ist und eine Ultraschallstanze (16) mit einer Sonotrode in Bezug zum Neigungswinkel der Arbeitsfläche ausgerichtet ist, so dass die durch trennendes Schweißen erhaltenen und vereinzelten Wischtücher infolge Gravitationskraft in einen Sammelbehälter bzw. zu einer Konfektioniereinrichtung fallen.

30. Vorrichtung nach Anspruch 29, **dadurch gekennzeichnet, dass** die Form der Sonotrode der äußeren Kontur von Randbereichen des Wischtuchs entspricht.

## Claims

1. Wiping sheet for use in clean working techniques, the wiping sheet comprising a sheet-like structure containing at least thermally deformable materials, **characterized by** the structure having at least one fold in double- or multi-layered form and an engagement opening being formed on a fold which lies open, at least one border region which is not bounded by folding edges (2, 2') being joined together by a welding edge (4) connecting all of the layers.

2. Wiping sheet according to Claim 1, **characterized in that** at least four layers are joined together by a welding edge connecting the layers.

3. Wiping sheet according to Claim 1 or 2, **characterized in that** the structure is a woven fabric, knitted fabric, nonwoven fabric or flock fabric or is composed of a polymeric mesh structure, stitch bond structure or of a polymeric foam material blank or of a sheet-like combination of structures of this type.

4. Wiping sheet according to one of Claims 1 to 3, **characterized in that** at least the outer layers on both sides are formed from different materials and/from a finer and a rougher knitted fabric, woven fabric, flock fabric, stitch bond structure, a polymeric mesh structure or a polymeric foam material blank, or one of these materials is formed as one of the outer and/or inner layers and an abradable sheet-like structure is formed as the further layer/layers.

5. Wiping sheet according to one of Claims 1 to 4, **characterized in that** the welding edge (84) produced by the welding of the layers has a curved shape or an angled shape.

6. Wiping sheet according to one of Claims 1 to 5, **characterized in that that** surface of the wiping sheet which can be used for the cleaning corresponds approximately to the size of a human hand or at least to the size of the surface taken up by the forehand contour.

7. Wiping sheet according to one of Claims 1 to 6, **characterized in that** a material (9, 9') which serves to increase the volume, to increase the elasticity, to adapt the surface and/or as a liquid store is situated between the layers of the folded wiping sheet.

8. Wiping sheet according to Claim 7, **characterized in that** the material of the wiping sheet is at least partially connected in the border region and/or in a sheet-like manner to the material (9, 9') which serves to increase the volume, to increase the elasticity, to adapt the surface or as a liquid store.

9. Wiping sheet according to Claim 7 or 8, **characterized in that** the material (9, 9') which serves as a liquid store is a superabsorbent.

10. Wiping sheet according to one of Claims 1 to 9, **characterized in that** the wiping sheet is impregnated with a cleaning agent or an application agent.

11. Wiping sheet according to one of Claims 1 to 10, **characterized in that** it is enclosed before use in a packaging or container which is resistant and impermeable to the cleaning or application agent.

12. Wiping sheet according to one of Claims 1 to 11, **characterized in that** it is lined in the interior by a sheet-like material (10) which is impermeable to liquid.

13. Wiping sheet according to one of Claims 1 to 12, **characterized in that** the inner parts are turned outwards.

14. Wiping sheet according to one of Claims 1 to 13, **characterized in that** at least the inner layers are connected to one another to form a fixing web (11) which is aligned parallel to the fingers of a hand which are introduced through the engagement opening (8).

15. Wiping sheet according to one of Claims 1 to 13, **characterized in that**, starting from the welded border region, a separating slot (12) is formed, the separating slot being aligned parallel to fingers of a hand which are introduced through the engagement opening (6) and its borders (12') being formed by a weld seam connecting all of the layers.

16. Wiping sheet according to Claim 14 or 15, **characterized in that** the fixing web (11) or the separating slot (12) has a length of at least 20 mm.

17. Wiping sheet according to one of Claims 1 to 16, **characterized in that** the material of the structure is strengthened at the border (8') of the engagement opening (6).

18. Method for producing a wiping sheet according to one of Claims 1 to 17, **characterized in that** a structure containing at least thermally deformable materials is folded in double- or multi-layered form and border regions which are not bounded by the rounded edges (2, 2') which arise as a consequence of the fold are joined together by separating welding to form a welding edge (4) connecting all of the layers to one another, and are separated.

19. Method according to Claim 18, **characterized in that** the welding edge (4) obtained by joining together is formed into a curved or angled shape during the separating welding.

20. Method according to Claim 18 or 19, **characterized in that** ultrasound is used for the separating and welding.

21. Method according to Claim 20, **characterized in that** a shaped sonotrode-cutting combination is used.

22. Method according to one of Claims 18 to 21, **characterized in that** the wiping sheet with its inner parts is turned outwards.

23. Method according to one of Claims 18 to 22, **characterized in that** a structure which is folded at least once is taken off a roller and a sonotrode-cutting combination is used to join together outer border regions, apart from an engagement opening (6), to form a continuous edge or two edges which are aligned parallel to each other, at which edge/edges all of the layers are welded to one another.

24. Method according to Claim 23, **characterized in that**, in order to form a fixing web (11), at least the inner layers of the folded structure are connected to one another.

25. Method according to Claim 24, **characterized in that** the layers are welded to one another.

26. Method according to Claim 23, **characterized in that** a separating slot (12) is formed, the borders of which (12') are connected to one another by a welding seam connecting all of the layers to one another.

27. Method according to one of Claims 18 to 26, **characterized in that** the structure is strengthened at the border (8') of the engagement opening (6).

28. Method according to Claim 27, **characterized in that** the structure is strengthened at the border (8') of the engagement opening (6) by an application of energy.

29. Apparatus for producing wiping sheets according to one of Claims 1 to 17, **characterized in that** a folded structure is guided in clocked form over a planar working surface which is inclined at an angle with respect to the horizontal, and an ultrasonic punch (16) with a sonotrode is aligned with respect to the angle of inclination of the working surface, so that the wiping sheets, which are obtained and separated by separating welding, drop as a result of gravitational force into a collecting container or to a packaging device.

30. Apparatus according to Claim 29, **characterized in that** the shape of the sonotrode corresponds to the outer contour of border regions of the wiping sheet.

## Revendications

1. Chiffon destiné à être utilisé pour les techniques de travail en salles blanches, lequel est formé par un produit en nappe contenant au moins des matériaux thermo-déformables, **caractérisé en ce qu'**une ouverture d'engagement est réalisée par au moins un pliage du produit en deux ou plusieurs couches et au niveau d'un pli ouvert, au moins une zone de bordure, non délimitée par les arêtes de pliage (2, 2'), étant jointe par un bord soudé (4) reliant toutes les couches.

2. Chiffon selon la revendication 1, **caractérisé en ce qu'**au moins quatre couches sont jointes par un bord soudé reliant les couches.

3. Chiffon selon la revendication 1 ou 2, **caractérisé en ce que** le produit est un tissu, un tricot, un non-tissé, un tissu floconneux, un tissu à mailles ou est formé par un produit réticulé polymère, un non-tissé lié par couture ou une découpe de mousse synthétique polymère ou une combinaison en nappe de tels produits.

4. Chiffon selon l'une quelconque des revendications 1 à 3, **caractérisé en ce qu'**au moins les couches extérieures sur les deux côtés sont formées par des matériaux différents et/ou par un tricot, un tissu à mailles, un tissu, un tissu floconneux, un non-tissé lié par couture, un produit réticulé polymère ou une découpe de mousse synthétique polymère plus fin et un tricot, un tissu à mailles, un tissu, un tissu floconneux, un non-tissé lié par couture, un produit réticulé polymère ou une découpe de mousse synthétique polymère plus grossier, ou par l'un de ces matériaux sous la forme d'une des couches extérieures et/ou intérieures et d'un produit en nappe abrasif sous la forme d'une ou de couche(s) supplémentaire(s).

5. Chiffon selon l'une quelconque des revendications 1 à 4, **caractérisé en ce que** le bord soudé (4), formé par le soudage des couches, a une forme courbe ou angulaire.

6. Chiffon selon l'une quelconque des revendications 1 à 5, **caractérisé en ce que** la surface du chiffon, apte à être utilisée pour le nettoyage, correspond à peu près à la taille d'une main humaine ou au moins à la dimension de la surface occupée par le contour de l'avant-main.

7. Chiffon selon l'une quelconque des revendications 1 à 6, **caractérisé en ce qu'**entre les couches du chiffon plié se situe un matériau (9, 9'), qui est destiné à augmenter le volume, à augmenter l'élasticité, à s'adapter à la surface et/ou à former un réservoir de liquide.

8. Chiffon selon la revendication 7, **caractérisé en ce que** le matériau du chiffon est relié au moins partiellement dans la zone de bordure et/ou sur toute la surface avec le matériau (9, 9'), qui est destiné à augmenter le volume, à augmenter l'élasticité, à s'adapter à la surface et/ou à former un réservoir de liquide.

9. Chiffon selon la revendication 7 ou 8, **caractérisé en ce que** le matériau (9, 9'), qui est destiné à former un réservoir de liquide, est un super-absorbant.

10. Chiffon selon l'une quelconque des revendications 1 à 9, **caractérisé en ce que** le chiffon est imprégné d'un produit de nettoyage ou d'un produit d'enduction.

11. Chiffon selon l'une quelconque des revendications 1 à 10, **caractérisé en ce que**, avant usage, il est enfermé dans un emballage ou récipient imperméable et résistant au produit de nettoyage ou d'enduction.

12. Chiffon selon l'une quelconque des revendications 1 à 11, **caractérisé en ce qu'**il est revêtu à l'intérieur d'un matériau (10) en nappe imperméable aux liquides.

13. Chiffon selon l'une quelconque des revendications 1 à 12, **caractérisé en ce que** les parties intérieures sont tournées vers l'extérieur.

14. Chiffon selon l'une quelconque des revendications 1 à 13, **caractérisé en ce qu'**au moins les couches intérieures sont reliées entre elles pour former une nervure de fixation (11) orientée parallèlement aux doigts d'une main introduits dans l'ouverture d'engagement (8).

15. Chiffon selon l'une quelconque des revendications 1 à 13, **caractérisé en ce que**, à partir de la zone de bordure soudée, est formée une fente de séparation (12), qui est orientée parallèlement aux doigts d'une main introduits dans l'ouverture d'engagement (6) et dont les bords (12') sont formés par un cordon de soudure reliant toutes les couches.

16. Chiffon selon la revendication 14 ou 15, **caractérisé en ce que** la nervure de fixation (11) ou la fente de séparation (12) ont une longueur d'au moins 20 mm.

17. Chiffon selon l'une quelconque des revendications 1 à 16, **caractérisé en ce que** le matériau du produit est consolidé sur le bord (8') de l'ouverture d'engagement (6).

18. Procédé de fabrication d'un chiffon selon l'une quelconque des revendications 1 à 17, **caractérisé en ce qu'**un produit contenant au moins des matériaux thermo-déformables est plié en deux ou plusieurs couches, et des zones de bordure, qui ne sont pas délimitées par les bords (2, 2') arrondis formés par le pliage, sont assemblées et sont jointes par soudage de séparation pour former un bord soudé (4) reliant toutes les couches entre elles.

19. Procédé selon la revendication 18, **caractérisé en ce que** le bord soudé (4) obtenu par jointement, est réalisé avec une forme courbe ou angulaire lors du soudage de séparation.

20. Procédé selon la revendication 18 ou 19, **caractérisé en ce que** des ultrasons sont utilisés pour séparer et souder.

21. Procédé selon la revendication 20, **caractérisé en ce qu'**il est utilisé une combinaison de coupe avec une sonotrode formée.

22. Procédé selon l'une quelconque des revendications 18 à 21, **caractérisé en ce que** le chiffon est tourné avec ses parties intérieures vers l'extérieur.

23. Procédé selon l'une quelconque des revendications 18 à 22, **caractérisé en ce qu'**un produit plié au moins une fois est déroulé d'un rouleau, et des zones de bordure extérieures, à l'exception d'une ouverture d'engagement (6), sont jointes au moyen d'une combinaison de coupe avec une sonotrode formée pour constituer un bord continu ou deux bords parallèles orientés face à face, au niveau duquel/desquels toutes les couches sont soudées.

24. Procédé selon la revendication 23, **caractérisé en ce qu'**au moins les couches intérieures du produit plié sont assemblées entre elles pour former une nervure de fixation (11).

25. Procédé selon la revendication 24, **caractérisé en ce que** les couches sont soudées entre elles.

26. Procédé selon la revendication 23, **caractérisé en ce qu'**il est formé une fente de séparation (12) dont les bords (12') sont assemblés entre eux par un cordon de soudure reliant toutes les couches entre elles.

27. Procédé selon l'une quelconque des revendications 18 à 26, **caractérisé en ce que** le produit est consolidé sur le bord (8') de l'ouverture d'engagement (6).

28. Procédé selon la revendication 27, **caractérisé en ce que** le produit est consolidé par un apport d'énergie sur le bord (8') de l'ouverture d'engagement (6).

29. Dispositif de fabrication de chiffons selon l'une quelconque des revendications 1 à 17, **caractérisé en ce qu'**un produit plié est acheminé sous forme cadencée sur une surface de travail plane, inclinée selon un angle par rapport à l'horizontale, et une découpeuse à ultrasons (16) avec une sonotrode est orientée par rapport à l'angle d'inclinaison de la surface de travail, de telle sorte que les chiffons obtenus et disjoints par soudage de séparation tombent sous l'effet de la force de gravité dans un collecteur ou un dispositif d'emballage.

30. Dispositif selon la revendication 29, **caractérisé en ce que** la forme de la sonotrode correspond au contour extérieur des zones de bordure du chiffon.
